# DEMANDE DE BREVET EUROPEEN

(11) **EP 1 121 863 A1**
(43) Date de publication de la demande: **08.08.2001**
(21) Numéro de dépôt: 01400275.2
(22) Date de dépôt: 02.02.2001
(51) Int. Cl.: A23J 3/18, A23J 3/34, A23K 1/16, A23L 1/305

(54) **Composition azotée résultant de l'hydrolyse du gluten de mais et son procédé de fabrication**

(30) Priorité: 04.02.2000 FR 0001432
(71) Demandeur: Roquette Frères, 62136 Lestrem (FR)
(72) Inventeur: Fouache, Catherine, 62113 Sailly/Labourse (FR); Seigueilha, Laurent, 59130 Lambersart (FR); Dubois, Eric, 62136 Lestrem (FR)
(74) Mandataire: Boulinguiez, Didier

(57) **Abrégé**

L'invention concerne une composition azotée résultant de l'hydrolyse enzymatique d'une solution aqueuse de gluten de maïs, caractérisé en ce qu'elle présente un rapport des concentrations en phosphore inorganique sur phosphore total (Pi/Pt) supérieur ou égal à 0,05, de préférence compris entre 0,05 et 0,5 et un rapport des concentrations en azote aminé et azote total (Na/Nt) supérieur ou égal à 0,025. L'invention concerne également l'utilisation d'une composition azotée conforme à l'invention dans les milieux de culture de microorganismes producteurs notamment d'acide organique.

## Description

La présente invention a pour objet une composition azotée résultant de l'hydrolyse enzymatique du gluten de maïs.

La présente invention concerne également un procédé de fabrication d'une telle composition azotée, ainsi que son application dans les milieux de culture pour les industries de fermentation.

Cette composition azotée est par ailleurs susceptible d'être utilisée comme aliment ou additif alimentaire dans des compositions destinées aux animaux.

Le gluten de maïs est connu pour être une source d'azote dans les industries de fermentation et une composante de certains produits alimentaires.

Cependant, les propriétés viscoélastiques du gluten de maïs rendent obligatoire sa solubilisation, si l'on souhaite l'utiliser comme source d'azote dans des procédés biotechnologiques ou comme aliment ou additif alimentaire.

Cette solubilisation du gluten peut être réalisée par des moyens chimiques (hydrolyse alcaline ou hydrolyse acide) ou par des moyens enzymatiques.

Par exemple, la demande de brevet WO 95.28850 décrit une méthode de solubilisation de protéines végétales par la mise en oeuvre d'enzymes à activité phytase en combinaison avec une ou plusieurs enzymes à activité protéase, une ou plusieurs enzymes à activité lipase et une ou plusieurs enzymes à activité glycosidase. Ces enzymes sont extraites de microorganismes de type *Bacillus*, *Pseudomonas, Kluveromyces*, *Saccharomyces, Aspergillus,* ...

Le mélange ainsi hydrolysé est alors utilisé en alimentation animale.

Le brevet EP 518.999 décrit l'obtention de produits partiellement hydrolysés grâce à un traitement spécifique à l'aide d'une sérine protéase particulière produite par *Bacillus licheniformis.* Ces produits sont intéressants pour la préparation d'aliments pour les humains, et notamment en alimentation infantile comme agent limitant le pouvoir allergène des protéines du lait complet et pour ses propriétés de meilleure digestibilité.

La demande de brevet EP 461.261 décrit la préparation d'oligopeptides particuliers par l'hydrolyse enzymatique de protéines de plantes de manière à obtenir une proportion élevée en acides aminés branchés et leur utilisation dans des préparations nutritives destinées à des patients souffrant de maladies du foie.

Un procédé qui permet la préparation d'agent aromatisant par hydrolyse enzymatique d'une matière riche en protéines végétales, sans devoir recourir à des exopeptidases purifiées pour en retirer l'amertume, tout en lui conférant des qualités organoleptiques intéressantes, a été décrit dans le brevet EP 429.760.

La possibilité d'utiliser un hydrolysat de protéines végétales dans un milieu de fermentation est également mentionnée dans la demande de brevet WO 94.25580.

Cependant aucun de ces documents n'indique ni ne suggère qu'un hydrolysat de gluten de maïs présentant une composition particulière quant à son contenu en phosphore et en azote, sa richesse en protéines solubles et insolubles et son spectre de distribution en acides aminés, puisse être spécialement adapté à des applications fermentaires, notamment dans le domaine des fermentations de microorganismes producteurs d'acides organiques et/ou dans des applications en alimentation animale.

L'invention se rapporte donc en premier lieu à une composition azotée résultant de l'hydrolyse du gluten de maïs, caractérisé en ce qu'elle présente un rapport des concentrations en phosphore inorganique sur phosphore total (Pi/Pt) supérieur ou égal à 0,05, de préférence compris entre 0,05 et 0,5 et un rapport des concentrations en azote aminé sur azote total (Na/Nt) supérieur ou égal à 0,025.

Les concentrations en phosphore inorganique et phosphore total sont mesurées selon des méthodes connues en toute généralité de l'homme du métier, telles que celles décrites ci-après.

En ce qui concerne le phosphore inorganique, la méthode de référence consiste à extraire le phosphore minéral ou inorganique par une solution d'acide trichloracétique, à former un complexe phosphomolybdique par réaction entre le phosphore inorganique et du molybdate d'ammonium et à mesurer l'absorbance de ce complexe au spectrophotomètre à une longueur d'onde de 360 nm.

En ce qui concerne le phosphore total, son dosage est réalisé selon une méthode qui repose sur la détection du phosphore sur spectromètre d'émission plasma (type JY83 de JOBIN YVON en suivant les spécifications du constructeur). Une étape préalable est toutefois mise en oeuvre, étape qui consiste à détruire les matières organiques des produits à doser de manière à transformer tout le phosphore organique en phosphore inorganique (le phosphore total est donc le phosphore organique plus le phosphore inorganique), par minéralisation à l'aide d'un mélange sulfonitrique.

De préférence, le rapport concentration phosphore inorganique sur concentration en phosphore total (Pi/Pt) est supérieur ou égal à 0,05, de préférence compris entre 0,05 et 0,5.

Les concentrations en azote aminé et azote total sont mesurées selon des méthodes connues et telles que celles décrites ci-après.

En ce qui concerne l'azote aminé, son dosage est effectué en faisant réagir la fonction amine du produit à doser avec l'acide trinitrobenzènesulfonique (TNBS), de manière à produire un groupement chromophore dont l'absorbance est mesurée à 340 nm.

En ce qui concerne l'azote total, son dosage est réalisé selon la méthode norme ISO 3188 qui consiste en une minéralisation du produit à doser par l'acide sulfurique en présence d'un catalyseur, puis en une alcalinisation des produits de la réaction et en une distillation de l'ammoniac libéré recueilli dans une solution d'acide borique qui est titré par une solution d'acide sulfurique.

Les teneurs en protéines totales et en protéines solubles de la composition conforme à l'invention sont respectivement comprises entre 20 et 80 % sur sec et 30 et 80 % sur sec.

On entend par teneur en protéines totales, l'azote total multiplié par un facteur 6,25.

On entend par teneur en protéines solubles, l'azote total multiplié par un facteur 6,25 contenu dans la fraction soluble qui correspond au surnageant obtenu après dispersion de l'échantillon dans l'eau distillée et centrifugation.

En outre, la composition azotée conforme à l'invention se caractérise notamment par une teneur en alanine libre supérieure ou égale à 100, de préférence à 500 mg/ 100 g sec, une teneur en leucine libre supérieure ou égale à 200, de préférence à 1000 mg/100 g sec et une teneur en phénylalanine libre supérieure ou égale à 100, de préférence à 500 mg/100 g sec.

L'invention se rapporte en second lieu à un procédé de fabrication d'une composition azotée résultant de l'hydrolyse enzymatique du gluten de maïs par une combinaison particulière d'enzymes.

Le gluten de maïs utilisé est de préférence un lait de protéines de maïs, obtenu après broyage des grains de maïs trempés et après la séparation des germes et de l'amidon par une technique physique basée sur la différence de densité des composés.

Le gluten de maïs peut également être extrait du lait de protéines par séparation physique de type centrifugation ou filtration et ensuite remise en suspension dans l'eau pour réaliser le traitement enzymatique conforme à l'invention.

Le procédé conforme à l'invention consiste à soumettre une solution aqueuse de gluten de maïs à un traitement enzymatique à l'aide d'au moins une protéase et éventuellement d'au moins une enzyme choisie dans le groupe constitué par un complexe d'endo et d'exopeptidases, un complexe enzymatique qui hydrolyse les polysaccharides du maïs autres que l'amidon, une phytase et une glucoamylase.

Dans un premier mode de fabrication de la composition azotée conforme à l'invention, on choisit de traiter une solution aqueuse de gluten de maïs dans une série d'étapes consistant à:
- introduire successivement dans la solution aqueuse de gluten de maïs au moins une protéase puis éventuellement un complexe d'endo et d'exopeptidases,
- laisser agir les enzymes sous agitation,
- inactiver les enzymes,
- éventuellement séparer les insolubles,
- récupérer la composition azotée ainsi obtenue.

Les protéases sont préférentiellement de la papaïne (par exemple la COROLASE® L10 commercialisée par la société RÖHM ENZYME) et/ou une protéase alcaline (telle une alcalase isolée de *B. licheniformis*). Cette première réaction d'hydrolyse sera avantageusement menée à une valeur de pH de 8.

Le complexe d'endo et d'exopeptidases sera quant à lui préférentiellement de la KOJIZYME™ (commercialisée par la société NOVO NORDISK). La réaction enzymatique est alors menée à une valeur de pH comprise entre 6 et 6,5, comme il sera exemplifié ci-après.

Dans un second mode de fabrication de la composition azotée conforme à l'invention, on choisit de traiter ladite solution aqueuse de gluten de maïs dans une série d'étapes consistant à:
- introduire simultanément dans la solution aqueuse de gluten de maïs au moins une protéase, au moins un complexe enzymatique qui hydrolyse les polysaccharides du maïs autres que l'amidon, au moins une phytase et au moins une glucoamylase,
- laisser agir les enzymes sous agitation
- inactiver les enzymes
- éventuellement séparer les insolubles,
- récupérer la composition azotée ainsi obtenue.

Les protéases sont préférentiellement une protéase acide (par exemple la Bioprotéase acide A commercialisée par la société BIOCON) et/ou la papaïne (par exemple la COROLASE® L10 commercialisée par la société RÖHM ENZYME).

Le complexe enzymatique qui hydrolyse les polysaccharides du maïs autres que l'amidon est la SPEZYME CP commercialisée par la société GENENCOR (constitué par un complexe d'activités enzymatiques cellulase, β-glucanase et pentosanase).

La phytase est par exemple celle fabriquée par la société BASF (NATUPHOS).

La glucoamylase est du type OPTIDEX L300 fabriquée par la société GENENCOR.

La société Demanderesse a trouvé que le traitement par toutes ces enzymes s'effectue avantageusement sur une solution aqueuse de gluten de maïs dont la matière sèche est comprise entre 5 et 50 %, à un pH compris entre 5 et 9, une température variant entre 45 et 65 °C et un temps de réaction compris entre 5 et 24 heures.

Lorsque les rapports Pi/Pt et Na/Nt atteignent les valeurs désirées, les réactions enzymatiques peuvent être stoppées par inactivation des enzymes. Pour cela, on a recours à des moyens physiques (température) et/ou chimiques (pH). De préférence, on soumet le milieu réactionnel à un chauffage à 60-90°C pendant un temps compris entre 10 et 60 minutes.

Le procédé conforme à l'invention consiste ensuite à concentrer la composition azotée ainsi obtenue pour la soumettre éventuellement à une étape d'atomisation.

La composition azotée est alors avantageusement débarrassée des insolubles, concentrée par évaporation, soit pour être conservée sous forme liquide, soit pour être atomisée ou déshydratée d'une manière appropriée.

La composition selon l'invention, grâce à ses caractéristiques particulières, présente un intérêt certain lorsqu'elle est utilisée, avantageusement débarrassée des insolubles, comme substrat de croissance microbienne dans les industries de fermentation.

Cette composition est notamment un substrat satisfaisant pour la production d'acides organiques par voie microbiologique.

La société Demanderesse a constaté que l'on pouvait avantageusement choisir des microorganismes dans le groupe constitué par des microorganismes du genre *Bacillus*, *Lactobacillus* et *Pseudomonas,* comme il sera exemplifié ci-après.

En outre, la composition azotée conforme à l'invention, sans qu'il ne soit nécessaire d'en éliminer les insolubles, intéresse l'industrie alimentaire, pour ses propriétés nutritionnelles et est ainsi utilisable en tant qu'aliment dans des compositions destinées plus particulièrement à l'alimentation animale.

D'autres caractéristiques et avantages de la présente invention apparaîtront clairement à la lecture des exemples donnés ci-après qui viennent illustrer l'invention sans toutefois la limiter.

### Exemple 1

Une suspension de protéines de maïs à 12,2 % de matière sèche est chauffée à 60 °C.

Le pH est ajusté à 8 par ajout de NaOH 10 N.

On ajoute ensuite de l'ALCALASE 2.4 L à 2,4 AU/g de *B. licheniformis* à raison de 1%/sec et de la COROLASE® L10 à plus de 757 U_{HB}/g à raison de 0,1 %/sec.

La température est maintenue à 60 °C pendant 7 heures, puis l'arrêt de sa régulation pendant 16 h permet de ramener la température à 50°C.

Le pH final de la réaction est de 7.

On ajoute alors de la KOJIZYME™ à 1000 LAPU/g à raison de 1%/sec.

Après 2,5 heures de réaction, celle-ci est stoppée par abaissement du pH à 4 et par élévation de la température du milieu réactionnel à 65°C.

On effectue ou non ensuite la filtration du milieu ainsi obtenu sur un module de filtration SCT Type A commercialisé par la société SCT équipée d'une membrane de céramique de 200 nm de seuil de coupure.

La température de filtration est alors fixée à 65°C.

On concentre la solution filtrée ou non par évaporation jusqu'à une matière sèche de 50 %.

On maintient la solution concentrée à une température de l'ordre de 60°C, et on atomise dans une tour d'atomisation du type NIRO, avec une température d'entrée de l'air comprise entre 165 et 180 °C, et une température de sortie de l'air comprise entre 65 et 90 °C.

Les tableaux I et II suivants présentent les résultats des analyses de l'aminogramme et des données physico-chimiques déterminées après traitement enzymatique sur la solution aqueuse de gluten de maïs, complété ou non par l'étape d'élimination des insolubles par filtration. La composition A est la composition qui n'a pas subi l'étape supplémentaire de filtration.

**Tableau I**

| **ACIDES AMINES** | **LIBRES (G/100 G)** | | **TOTAUX (G/100 G)** | |
|---|---|---|---|---|
| | Composition A | | Composition A | |
| Asp | 0,02 | 0,10 | 2,31 | 3,20 |
| Thr | 0,23 | 0,43 | 1,78 | 1,95 |
| Ser | 0,13 | 0,44 | 1,86 | 2,61 |
| Asn | 0,15 | 0,41 | Nd | 0 |
| Glu | 0,03 | 0,26 | 7,93 | 10,49 |
| Gln | 0,15 | 0,31 | Nd | 0 |
| Gly | 0,11 | 0,22 | 1,20 | 1,56 |
| Ala | 0,53 | 1,43 | 3,49 | 5,23 |
| Citrulline | 0,05 | 0,57 | Nd | 0,39 |
| Val | 0,37 | 0,75 | 1,77 | 2,59 |
| Cystine | 0,08 | 0,01 | 0,67 | 0 |
| Met | 0,17 | 0,47 | 0,49 | 0 |
| Iso | 0,25 | 0,61 | 1,49 | 2,14 |
| Leu | 1,11 | 3,42 | 5,73 | 8,74 |
| Tyr | 0,20 | 0,03 | 1,81 | 1,82 |
| Phe | 0,53 | 1,22 | 2,13 | 3,16 |
| Omithine | 0,02 | 0,23 | 0,09 | 0 |
| Lys | 0,06 | 0,22 | 0,73 | 0,71 |
| His | 0,10 | 0,27 | 0,83 | 0,85 |
| Arg | 0,27 | 0,30 | 1,25 | 1,14 |
| Pro | 0,19 | Nd | 3,16 | 0,74 |
| A.G.A. butyrique | 0,16 | 0,24 | 0,20 | 4,90 |

**Tableau II**

| | Composition A | |
|---|---|---|
| Azote total (% brut) | 9 | 9,6 |
| Azote aminé (% brut) | 1 | 3,2 |
| Phosphore inorganique (% brut) | 0,06 | 0,06 |
| Phosphore total (% brut) | 0,64 | 0,5 |

### Exemple 2

Une suspension de protéines de maïs à 12,2 % de matière sèche est traitée dans les mêmes conditions que l'exemple 1 mais sans action complémentaire à la KOJIZYME™.

On effectue la filtration du milieu ainsi obtenu après les 16 h de réaction sur un module de filtration SCT Type A commercialisé par la société SCT équipée d'une membrane de céramique de 200 nm de seuil de coupure.

La température de filtration est fixée à 65°C.

On concentre la solution filtrée par évaporation jusqu'à une matière sèche de 50 %.

On maintient la solution concentrée à une température de l'ordre de 60°C, et on atomise dans une tour d'atomisation du type NIRO, avec une température d'entrée de l'air comprise entre 165 et 180 °C, et une température de sortie de l'air comprise entre 65 et 90 °C.

Les tableaux III et IV suivants présentent les résultats des analyses de l'aminogramme et des données physico-chimiques déterminées sur la composition azotée B conforme à l'invention ainsi obtenue.

**Tableau III**

| **Acides aminés** | **Libres (g/100 g)** | **Totaux (g/100 g)** |
|---|---|---|
| Asp | 0,06 | 3,5 |
| Thr | 0,08 | 1,7 |
| Ser | 0,18 | 2,5 |
| Asn | 0,13 | Nd |
| Glu | 0,12 | 12 |
| Gln | Nd | Nd |
| Gly | 0,11 | 1,7 |
| Ala | 0,30 | 4,7 |
| Citrulline | 0,08 | Nd |
| Val | 0,25 | 2,6 |
| Cystine | Nd | Nd |
| Met | 0,11 | Nd |
| Iso | 0,10 | 2,1 |
| Leu | 0,47 | 8 |
| Tyr | 0,05 | 1,7 |
| Phe | 0,37 | 3 |
| Ornithine | 0,10 | 0,23 |
| Lys | 0,08 | 1 |
| His | 0,03 | 1,1 |
| Arg | 0,05 | 1,6 |
| Pro | 0,21 | 4,4 |
| A.G.A. butyrique | 0,10 | 0,12 |

**Tableau IV**

| | |
|---|---|
| Azote total (% brut) | 9 |
| Azote aminé (% brut) | 1,7 |
| Phosphore inorganique (% brut) | 0,05 |
| Phosphore total (% brut) | 0,52 |

### Exemple 3

Une suspension de protéines de maïs à 14 % de matière sèche est chauffée à 50 °C. Le pH de la solution de protéines de maïs est de 4,4.

On ajoute simultanément dans le milieu réactionnel de la Bioprotéase A acide BIOCON à 600.000 U/g à raison de 0,9 %/sec, de la phytase NATUPHOS 5000 à 5000 UP/g à raison de 0,1 %/sec, de la SPEZYME CP à 90 GCU/ml à raison de 0,1 %/sec, de l'OPTIDEX 300 A à 300 GAU/ml à raison de 0,1 %/sec et de la papaïne PROFIX 100 à 100 TU/g à raison de 0,1%/sec.

L'incubation est menée pendant 17 h sous agitation, avec régulation de la température à 50 °C. la réaction est stoppée par abaissement du pH à 3,5 et par élévation de la température du milieu réactionnel à 65°C. Les conditions de filtration et d'atomisation sont les mêmes que celles données dans l'exemple 1.

Les tableaux V et VI suivants présentent les résultats des analyses de l'aminogramme et des données physico-chimiques déterminées sur la composition azotée C conforme à l'invention ainsi obtenue.

**Tableau V**

| **ACIDES AMINÉS** | **LIBRES (G/100 G)** | **TOTAUX (G/100 G)** |
|---|---|---|
| Asp | 0,16 | 2,10 |
| Thr | 0,16 | 1,56 |
| Ser | 0,19 | 1,78 |
| Asn | 0,15 | Nd |
| Glu | 0,18 | 7,57 |
| Gln | 0,39 | Nd |
| Gly | 0,10 | 1,07 |
| Ala | 0,82 | 3,28 |
| Citrulline | 0,18 | Nd |
| Val | 0,30 | 1,66 |
| Cystine | Nd | 0,70 |
| Met | 0,33 | 0,51 |
| Iso | 0,17 | 1,31 |
| Leu | 1,64 | 5,19 |
| Tyr | 0,44 | 1,52 |
| Phe | 0,72 | 1,84 |
| Ornithine | 0,04 | 0,16 |
| Lys | 0,18 | 0,65 |
| His | 0,13 | 0,79 |
| Arg | 0,34 | 1,12 |
| Pro | 0,29 | 3,38 |
| A.G.A. butyrique | 0,17 | 0,27 |

**Tableau VI**

| | |
|---|---|
| Azote total (% brut) | 9 |
| Azote aminé (% brut) | 1,1 |
| Phosphore inorganique (% brut) | 0,33 |
| Phosphore total (% brut) | 0,88 |

### Exemple 4

La production d'acide lactique est effectuée dans les conditions suivantes. Le microorganisme utilisé est un *Lactobacillus plantarum.*

Le fermenteur de production B. BRAUN d'un volume utile de 15 l est inoculé à l'aide du *Lactobacillus plantarum* provenant d'un milieu de préculture de 16 h.

Ce milieu de préculture, introduit à raison de 750 ml dans un erlenmeyer de 2 l, est constitué de glucose à 60 g/l, d'extrait de levures à 10 g/l, de CaCO₃ à 30 g/l ensemencé à l'aide d'un carré de gélose sur lequel *Lactobacillus plantarum* a poussé pendant 24 h. L'agitation est fixée à 150 rpm sur agitateur orbital de laboratoire, à une température de 46 °C. Le pH initial est fixé à 7.

Le fermenteur de production est ensemencé avec 5 % de milieu de préculture et le milieu de production est alors agité à 150 rpm, à 46 °C, avec une régulation de pH à 5,8 par de la potasse à 50 %.

60 g/l de glucose sont utilisés comme source de carbone assimilable par le *Lactobacillus plantarum.*

La composition des 7 milieux de production différant par la nature de leurs substrats azotés (mais en respectant l'équivalent azote), ainsi que les productivités en acide lactique sont données dans le tableau VII suivant.

**Tableau VII**

| **COMPOSITION** | **CONCENTRATION DANS LE MILIEU DE PRODUCTION (G/L)** | **PRODUCTIVITÉ À 24 H (G/L/H)** |
|---|---|---|
| Composition azotée A | 10 | 1,7 |
| Composition azotée B | 10 | 1,8 |
| Composition azotée C | 10 | 1,75 |
| Extrait de levures | 10 | 2,1 |
| Liqueur de corn steep | 25 | 1,8 |

On constate que la productivité en lactate de potassium est équivalente quand la source azotée est constituée par la composition azotée conforme à l'invention, par les extraits de levures, ou par la liqueur de corn steep.

Cependant, on admet qu'en comparaison du coût de production des extraits de levures en regard de celui des compositions azotées conformes à l'invention, il est plus avantageux d'utiliser cette composition azotée facile à préparer et peu coûteuse que les extraits de levures classiques.

Quant à la liqueur de corn steep, à apport équivalent en azote pour obtenir la même productivité qu'avec les compositions azotées conformes à l'invention, il est nécessaire d'introduire une matière sèche bien plus importante. Or, il est connu de l'homme du métier que la liqueur de corn steep renferme d'autres composants qui sont susceptibles de gêner la production de lactates de calcium (par exemple par sa propre teneur élevée en lactates). De plus, la liqueur de corn steep constitue également un milieu complexe qui nécessitera d'avoir recours à des techniques de purification lourde et coûteuse pour récupérer ledit lactate de calcium.

### Exemple 5

La production d'acide lactique est effectuée dans les conditions suivantes. Le microorganisme utilisé est le *Bacillus coagulans* DSM 2311.

Le fermenteur de production NEW BRUNSWICK d'un volume utile de 2 l est inoculé à l'aide du *Bacillus coagulans* provenant d'un milieu de préculture de 16 h.

Ce milieu de préculture, introduit à raison de 150 ml dans un erlenmeyer de 500 ml, est constitué de :
- glucose à 20 g/l, de composition azotée A conforme à l'invention (exemple 1) à 10 g/l, de (NH₄)₂PO₄ à 1,5 g/l, de CaCO₃ à 10 g/l,
   ou, pour le témoin, de
- glucose à 20 g/l, d'extrait de levures à 3 g/l, de (NH₄)H₂PO₄ à 1,5 g/l et de CaCO₃ à 3 g/l.
ensemencé à l'aide d'un carré de gélose sur lequel *Bacillus coagulans* a poussé pendant 24 h à 44°C.

L'agitation est fixée à 100 rpm sur agitateur orbital de laboratoire, à une température de 44 °C. Le pH est amené à 6,5 par du NaOH.

Le fermenteur de production est ensemencé avec 10 % de milieu de préculture et le milieu de production est alors agité à 100 rpm, à 44 °C, avec une régulation de pH à 6,5 par du NH₄OH à 20 %.

80 g/l de glucose sont utilisés comme source de carbone assimilable par le *Bacillus coagulans.*

La composition des 2 milieux de production différant par la nature de leurs substrats azotés (mais en respectant l'équivalent azote), ainsi que les productivités en acide lactique sont données dans le tableau VIII suivant.

**Tableau VIII**

| **COMPOSITION** | **CONCENTRATION DANS LE MILIEU DE PRODUCTION (G/L)** | **PRODUCTIVITÉ À 24 H (G/L/H)** |
|---|---|---|
| Composition azotée A | 10 | 1,5 |
| Composition azotée C | 10 | 1,5 |
| Extrait de levures (Témoin) | 10 | 0,7 |

Pour *B*. *coagulans,* les compositions azotées conformes à l'invention constituent donc une source particulièrement adaptée à la production de lactate de calcium.

### Exemple 6

La production d'acide maltobionique est effectuée dans les conditions suivantes. Le microorganisme utilisé est un *Pseudomonas cepacia.*

Le fermenteur de production NEW BRUNSWICK d'un volume utile de 2 l est inoculé à l'aide du *Pseudomonas cepacia* provenant d'un milieu de préculture de 24 h.

Ce milieu de préculture, introduit à raison de 50 ml dans un erlenmeyer de 500 ml, est constitué de :
- glucose à 5 g/l, de composition azotée A conforme à l'invention (exemple 1) à 10 g/l, de CaCO₃ à 10 g/l,
   ou, pour le témoin, de
- glucose à 5 g/l, d'extrait de levures à 7,5 g/l, de liqueur de corn steep de 50 % en poids à 5g/l, de MgSO₄ à 0,2 g/l, de KH₂PO₄ à 1 g/l et de CaCO₃ à 3 g/l.
ensemencé à l'aide d'un carré de gélose sur lequel *Pseudomonas cepacia* a poussé pendant 24 h à 30°C.

L'agitation est fixée à 250 rpm sur agitateur orbital de laboratoire, à une température de 30°C. Le pH est amené à 7 par du NaOH.

Le fermenteur de production est ensemencé avec 10 % de milieu de préculture et le milieu de production est alors agité à 900 rpm, sous une aération de 1,9 vvm, à 30 °C, avec une régulation de pH à 7 par du NaOH.

80 g/l de maltose sont utilisés comme source de carbone assimilable par le *Lactobacillus plantarum*.

La composition des 2 milieux de production différant par la nature de leurs substrats azotés (mais en respectant l'équivalent azote), ainsi que les productivités en acide lactique sont données dans le tableau IX suivant.

**Tableau IX**

| **COMPOSITION** | **CONCENTRATION DANS LE MILIEU DE PRODUCTION (G/L)** | **PRODUCTIVITÉ (G/L/H)** |
|---|---|---|
| Composition azotée A | 9 | 2 |
| Composition azotée C | 10 | 2,1 |
| Extrait de levures (Témoin) | 5 | 0,8 |

Les résultats obtenus montrent l'intérêt des compositions azotées conformes à l'invention pour la production de maltobionate de calcium.

### Exemple 7

La production d'acide lactique est effectuée dans les conditions suivantes. Le microorganisme utilisé est un *Streptococcus thermophilus.*

Le fermenteur de production NEW BRUNSWICK d'un volume utile de 2 l est inoculé à l'aide du *Streptococcus thermophilus* provenant d'un milieu de préculture de 16 h.

Ce milieu de préculture, introduit à raison de 150 ml dans un erlenmeyer de 500 ml, est constitué de :
- glucose à 20 g/l, de composition azotée A conforme à l'invention (exemple 1) à 10 g/l, de (NH₄)₂PO₄ à 1,5 g/l, de CaCO₃ à 10 g/l,
   ou, pour le témoin, de
- glucose à 20 g/l, d'extrait de levures à 3 g/l, de (NH₄)H₂PO₄ à 1,5 g/l et de CaCO₃ à 3 g/l.
ensemencé à l'aide d'un carré de gélose sur lequel *Streptococcus thermophilus* a poussé pendant 24 h à 44°C.

L'agitation est fixée à 100 rpm sur agitateur orbital de laboratoire, à une température de 44 °C. Le pH est amené à 6,5 par du NaOH.

Le fermenteur de production est ensemencé avec 10 % de milieu de préculture et le milieu de production est alors agité à 100 rpm, à 44 °C, avec une régulation de pH à 6,5 par du NH₄OH à 20 %.

80 g/l de glucose sont utilisés comme source de carbone assimilable par le *Streptococcus thermophilus.*

La composition des 2 milieux de production différant par la nature de leurs substrats azotés (mais en respectant l'équivalent azote), ainsi que les productivités en acide lactique sont données dans le tableau X suivant.

**Tableau X**

| **COMPOSITION** | **CONCENTRATION DANS LE MILIEU DE PRODUCTION (G/L)** | **PRODUCTIVITÉ À 24 H (G/L/H)** |
|---|---|---|
| Composition azotée A | 10 | 2 |
| Composition azotée C | 10 | 1,9 |
| Extrait de levures (Témoin) | 10 | 1,1 |

Pour *Streptococcus thermophilus,* les compositions azotées conformes à l'invention constituent donc une source particulièrement adaptée à la production de lactate de calcium.

## Revendications

1. Composition azotée résultant de l'hydrolyse enzymatique d'une solution aqueuse de gluten de maïs, caractérisée en ce qu'elle présente un rapport des concentrations en phosphore inorganique sur phosphore total (Pi/Pt) supérieur ou égal à 0,05, de préférence compris entre 0,05 et 0,5, et un rapport des concentrations en azote aminé et azote total (Na/Nt) supérieur ou égal à 0,025.

2. Composition azotée selon la revendication 1, caractérisée en ce qu'elle présente un taux de protéines totales compris entre 20 et 80 % sur sec et un taux de protéines solubles compris entre 30 et 80 % sur sec.

3. Composition azotée selon l'une ou l'autre des revendications 1 à 2, caractérisée en ce qu'elle présente une teneur en alanine libre supérieure ou égale à 100 mg/100 g sec, une teneur en leucine libre supérieure ou égale à 200 mg/100 g sec et une teneur en phénylalanine libre supérieure ou égale à 100 mg/100 g sec.

4. Composition azotée selon la revendication 1, caractérisée par le fait qu'elle présente un rapport des concentrations en azote aminé et azote total (Na/Nt) supérieur ou égal à 0,05.

5. Composition azotée selon l'une quelconque des revendications 1 à 4, caractérisée par le fait qu'elle présente une teneur en alanine libre supérieure ou égale à 500 mg/100 g sec, une teneur en leucine libre supérieure ou égale à 1000 mg/100 g sec et une teneur en phénylalanine libre supérieure ou égale à 500 mg/g sec.

6. Procédé de fabrication d'une composition azotée selon l'une quelconque des revendications 1 à 5, caractérisé par le fait que l'on soumet une solution aqueuse de gluten de maïs à un traitement enzymatique à l'aide d'au moins une protéase et éventuellement d'au moins une enzyme choisie dans le groupe constitué par un complexe d'endo et d'exopeptidases, un complexe enzymatique qui hydrolyse les polysaccharides du maïs autres que l'amidon, une phytase et une glucoamylase.

7. Procédé selon la revendication 6, caractérisé par le fait qu'il comprend les étapes consistant à :
- introduire successivement dans la solution aqueuse de gluten de maïs au moins une protéase puis éventuellement un complexe d'endo et d'exopeptidases,
- laisser agir les enzymes sous agitation,
- inactiver les enzymes,
- éventuellement, séparer les insolubles,
- récupérer la composition azotée ainsi obtenue.

8. Procédé selon la revendication 6, caractérisé par le fait qu'il comprend les étapes consistant à :
- introduire simultanément dans la solution aqueuse de gluten de maïs au moins une protéase, au moins un complexe enzymatique qui hydrolyse les polysaccharides du maïs autres que l'amidon, au moins une phytase et au moins une glucoamylase,
- laisser agir les enzymes sous agitation
- inactiver les enzymes
- éventuellement séparer les insolubles,
- récupérer la composition azotée ainsi obtenue.

9. Procédé selon l'une quelconque des revendications 6 à 8, caractérisé par le fait que la composition azotée récupérée est concentrée pour être éventuellement soumise à une étape d'atomisation.

10. Procédé selon l'une quelconque des revendications 6 à 9, caractérisé par le fait que le traitement par les enzymes s'effectue sur une solution aqueuse de gluten de maïs dont la matière sèche est comprise entre 5 et 50 %, à un pH compris entre 5 et 9, une température variant entre 45 et 65 °C et un temps de réaction compris entre 5 et 24 heures.

11. Utilisation d'une composition azotée selon l'une quelconque des revendications 1 à 6 dans les milieux de culture de microorganismes producteurs notamment d'acides organiques.
